# EUROPÄISCHE PATENTANMELDUNG

(11) **EP 4 417 287 A1**
(43) Veröffentlichungstag der Anmeldung: **21.08.2024**
(21) Anmeldenummer: 24154777.7
(22) Anmeldetag: 30.01.2024
(51) Int. Cl.: B01D 29/05, B01D 29/15, B01D 29/56, B01D 35/02, D06F 39/10, A47L 15/42

(54) **FILTRATIONSEINRICHTUNG FÜR EIN WASSERFÜHRENDES HAUSHALTSGERÄT**

(30) Priorität: 14.02.2023 DE 102023103574
(71) Anmelder: emz-Hanauer GmbH & Co. KGaA, 92507 Nabburg (DE)
(72) Erfinder: Spießl, Georg, 92540 Altendorf (DE); Signorino, Manfredi, 92442 Wackersdorf (DE); Schemela, Benjamin, 92720 Schwarzenbach (DE)
(74) Vertreter: Hannke, Christian

(57) **Zusammenfassung**

Die Erfindung betrifft eine Filtrationseinrichtung insbesondere zur Filtration von Mikroplastik für ein wasserführendes Haushaltsgerät, wobei die Filtrationseinrichtung ein Gehäuse umfasst, in welchem ein erstes Filterelement angeordnet ist, wobei das erste Filterelement derart ausgestaltet ist, dass es einen inneren Hohlraum umschließt, welcher mit einem ersten Abflusselement fluidisch verbunden ist, wobei zwischen dem ersten Filterelement und dem Gehäuse ein Zwischenraum vorhanden ist, in welchen das zu filternde Wasser einführbar ist, wobei ein zweites Filterelement zwischen dem Zwischenraum und einem zweiten Abflusselement vorgesehen ist.

## Beschreibung

Die Erfindung betrifft eine Filtrationseinrichtung insbesondere zur Filtration von Mikroplastik für ein wasserführendes Haushaltsgerät, wobei die Filtrationseinrichtung ein Gehäuse umfasst. Ferner betrifft die Erfindung ein wasserführendes Haushaltsgerät mit einer Filtrationseinrichtung insbesondere zur Filtration von Microplastik.

Als Mikroplastik feste, unlösliche, partikuläre und nicht biologisch abbaubare synthetische Stoffe beziehungsweise Kunststoffe bezeichnet. Die Mikroplastikteilchen haben eine Größe im Mikrometer- oder Nanometerbereich. Mikroplastik sind Bestandteile in Waschmitteln, Seifen etc.. Ferner werden bei der Wäsche synthetischer Textilien oder Kleidungsstücke umfassend synthetische Textilanteile kleinste Synthetik-Fasern gelöst. Die ungefilterten Mikroplastikteilchen und - fasern haben einen erheblichen schädlichen Einfluss auf die Wasserflora und -fauna und damit auch auf den Menschen als Teil der Nahrungskette. Daher sind wasserführende Haushaltsgeräte mit Filtervorrichtungen ausgestattet. Diese sind jedoch oftmals nicht in der Lage die Mikroplastikteilchen und -fasern wirksam zu beseitigen. Effektivere Filter haben dagegen den Nachteil, dass sie schnell verstopfen und somit einen erhebliche Wartungsaufwand verursachen.

Aufgabe der Erfindung ist es eine verbesserte Filtration insbesondere zur Filtration von Mikroplastik für wasserführende Haushaltsgeräte bereitzustellen.

Die Aufgabe wird gelöst durch die Gegenstände der Ansprüche 1 und 9. Die Unteransprüche umfassen bevorzugte Ausführungsformen.

Erfindungsgemäß wird eine Filtrationseinrichtung insbesondere zur Filtration von Mikroplastik für ein wasserführendes Haushaltsgerät bereitgestellt, wobei die Filtrationseinrichtung ein Gehäuse umfasst, in welchem ein erstes Filterelement angeordnet ist, wobei das erste Filterelement derart ausgestaltet ist, dass es einen inneren Hohlraum umschließt, welcher mit einem ersten Abflusselement fluidisch verbunden ist, wobei zwischen dem ersten Filterelement und dem Gehäuse ein Zwischenraum vorhanden ist, in welchen das zu filternde Wasser einführbar ist, wobei ein zweites Filterelement zwischen dem Zwischenraum und einem zweiten Abflusselement vorgesehen ist.

Ein entsprechendes wasserführendes Haushaltsgerät ist insbesondere eine Waschmaschine. Denkbar wäre jedoch auch eine Anwendung bei Geschirrspülern. Im Weiteren wird sich ohne Beschränkung auf die Allgemeinheit auf ein Haushaltsgerät in Form einer Waschmaschine beschränkt. Durch eine erfindungsgemäße Ausführung wird eine effektive Filterung von Mikroplastikteilchen und -fasern erreicht.

Nach einer besonders bevorzugten Ausführungsform erstreckt sich das Gehäuse der Filtrationseinrichtung entlang einer Höhenachse Z. Vorzugsweise ist ein Zuleitungselement vorgesehen, welches entlang der Höhenachse Z über dem ersten Filterelement angeordnet ist. Weiterhin ist es bevorzugt, dass das zweite Filterelement entlang der Höhenachse Z unter dem ersten Filterelement angeordnet ist. Ferner ist es von Vorteil, dass das zweite Abflusselement entlang der Höhenachse Z unter dem zweiten Filterelement angeordnet ist.

Während eines Pumpvorgangs kann das Abwasser eines Waschvorgangs einer Filtrationseinrichtung zugeführt werden. Der Eintritt des zu filternden Wassers ist vorteilhafterweise entlang der Höhenachse Z über dem ersten Filterelement und dem zweiten Filterelement. Während des Pumpvorgangs füllt das eingeführte Wasser den Zwischenraum zumindest teilweise und tritt überwiegend durch das erste Filterelement, um zu den ersten Abflusselement zu gelangen. Die Mikroplastikteilchen oder -fasern verbleiben dabei an einer äußeren Oberfläche des ersten Filterelements. Nach Beendigung des Pumpvorgangs gelangt vorteilhafterweise ein Großteil oder im Wesentlichen alle gefilterten Mikroplastikteilchen oder -fasern zu dem zweiten Filterelement. Dies erfolgt aufgrund der entlang der Höhenachse Z wirkenden Gravitationskraft. Ferner ist es von Vorteil, dass eine Ableitung aus dem ersten Abflusselement bei Beendigung des Pumpvorgangs gesperrt wird. Dies kann vorzugsweise mit einer Ventileinrichtung erfolgen. Vorzugsweise ist das zweite Filterelement derart ausgebildet, dass die darin aufgefangenen Mikroplastikteilchen oder -fasern einfach entnommen werden können.

Nach einer weiteren bevorzugten Ausführungsform ist das erste Filterelement im Wesentlichen hohlzylindrisch ausgebildet. Vorzugsweise weist das erste Filterelement im Wesentlichen einen kreisförmigen Querschnitt auf. Denkbar wären jedoch auch weitere andersartig ausgebildete Querschnitte beispielsweise elliptisch, quadratisch, rechteckförmig dreieckig oder eine anderweitige Polygonform. Vorzugsweise weist das erste Filterelement eine Trägerstruktur auf, an welcher zumindest ein Filtersieb angeordnet ist. Vorteilhafterweise bildet das Filtersieb einen geschlossenen Zylindermantel. Der bevorzugte kreisförmige Querschnitt begünstigt das Herunterfallen der Mikroplastikteilchen oder -fasern nach Beendigung des Pumpvorgangs, da diese Form eine geringe Auflagefläche ausbildet.

Nach einer weiteren bevorzugten Ausführungsform ist das zweite Filterelement verlagerbar in dem Gehäuse angeordnet. Vorzugsweise ist das zweite Filterelement schubladenartig ausgebildet. Vorzugsweise ist das zweite Filterelement zumindest abschnittsweise aus dem Gehäuse entfernbar. Vorzugsweise umfasst das zweite Filterelement zumindest ein Filtersieb, welches im Wesentlichen planar ausgebildet ist. Dabei ist es von Vorteil, dass das zweite Filterelement ein schubladenartig ausgebildetes Trägerelement umfasst, in welchem das Filtersieb angeordnet oder integriert ist. Durch die vorteilhafte Möglichkeit das zweite Filterelement schubladenartig aus dem Gehäuse zu entnehmen, wird eine äußerst einfache Möglichkeit zum Entleeren der zweiten Filterelement bereitgestellt. Da vorteilhafterweise der Großteil der gefilterten Mikroplastikteilchen oder -fasern in dem zweiten Filterelement enden, kann die gesamte Filtrationseinrichtung auf eine sehr einfache Art und Weise geleert werden.

Nach einer weiteren bevorzugten Ausführungsform ist ein Verlagerungssystem vorgesehen, mittels welchem das Trägerelement automatisch aus dem Gehäuse verlagerbar ist. Vorzugsweise umfasst das Verlagerungssystem eine Vorspanneinrichtung, welche zwischen dem Trägerelement und dem Gehäuse angeordnet ist. Die Vorspanneinrichtung kann beispielsweise ein Federelement, ein Druckelement oder ein komprimierbares elastisches Element sein. Die Vorspanneinrichtung dient als Antrieb für die Verlagerung des schubladenartig ausgebildeten Trägerelements. Weiterhin umfasst das Verlagerungssystem eine Verriegelungseinrichtung, welches zwischen dem Trägerelement und dem Gehäuse vorgesehen ist. Befindet sich das schubladenartig ausgebildete Trägerelement in dem Gehäuse ist die Vorspanneinrichtung vorgespannt und die Verriegelungseinrichtung verhindert eine Bewegung des Trägerelements aufgrund der Entspannung der Vorspanneinrichtung. Wird die Verriegelungseinrichtung geöffnet kann die Vorspanneinrichtung entspannen und das Trägerelement antreiben. Vorzugsweise ist das Verrieglungselement automatisch betätigbar. Bevorzugt ist das Verrieglungselement automatisch als auch händisch betätigbar. Denkbar wären jedoch auch anderweitige Ausgestaltungen des Verlagerungssystems. So könnte das Verlagerungssystem einen Stellantrieb, beispielsweise einen elektrisch angetriebenen Stellantrieb, umfassen, welcher die Verlagerung des Trägerelements antreibt.

Vorteilhafterweise sind das Gehäuse der Filtrationseinrichtung, die Trägerstruktur des ersten Filterelements und das Trägerelement des zweiten Filterelements aus einem Kunststoff gefertigt. Denkbar wäre jedoch auch eine Ausgestaltung aus einem Metall oder einer Metalllegierung. Vorzugsweise bestehen die Filtersiebe des ersten Filterelements und des zweiten Filterelements aus mikroporösen und hydrophoben Kunststoff. Die Filtersiebe können als Feststoffkörper oder Matte vorliegen. Denkbar wäre auch eine Ausgestaltung der Filtersiebe als Faservliese.

Die vorliegende Aufgabe der Erfindung wird auch von einem wasserführenden Haushaltsgerät, umfassend zumindest einen Laugenbehälter und zumindest einer Filtrationseinrichtung nach einem der vorher beschriebenen Ausführungsbeispiele, gelöst. Das Haushaltsgerät kann dabei mit allen bereits obig im Rahmen der Filtrationseinrichtung beschriebenen Merkmalen einzeln oder in Kombination miteinander ausgestattet sein und umgekehrt.

Ein solches Haushaltsgerät umfasst vorteilhafterweise ein Gehäuse, in welchem der zumindest eine Laugenbehälter angeordnet ist. Vorzugsweise ist die Filtrationseinrichtung in dem Gehäuse des Haushaltsgeräts angeordnet. Vorzugsweise ist die Filtrationseinrichtung in einem oberen Bereich des Haushaltsgeräts vorgesehen, damit diese für die Entleerung leicht zugänglich ist. Vorzugsweise ist das Haushaltsgerät eine Waschmaschine. Denkbar wäre jedoch auch eine Geschirrspülmaschine. In dem Laugenbehälter werden die zu waschenden Gegenstände eingebracht. Bei dem Waschvorgang wird dann eine Waschflüssigkeit in Form von mit einem Behandlungsmittel versetzten Wasser in den Laugenbehälter eingebracht.

Vorzugsweise umfasst das wasserführende Haushaltsgerät eine Pumpeinrichtung, welche Wasser aus dem Laugenbehälter zu der zumindest einen Filtrationseinrichtung befördert. Nach oder während des Waschvorgangs wird somit das Abwasser mittels der Pumpeinrichtung aus dem Laugenbehälter gepumpt. Vorteilhafterweise ist das erste Abflusselement fluidisch mit dem Laugenbehälter verbunden. Denkbar wäre auch, dass das erste Abflusselement mit dem Abfluss des Haushaltsgeräts verbunden ist. Vorzugsweise ist das zweite Abflusselement über eine Bypassleitung mit einem Abfluss des wasserführenden Haushaltsgeräts verbunden.

Weiterhin ist es von Vorteil, dass das wasserführende Haushaltsgerät eine Steuerungseinrichtung umfasst, welche die Filtrationseinrichtung steuert. Vorzugsweise steuert die Steuerungseinrichtung das Verlagerungssystem der Filtrationseinrichtung. Dabei kann die Verriegelungseinrichtung angesteuert werden. Sollte das Verlagerungssystem vorteilhafterweise einen Stellantrieb umfassen, könnte dieser durch die Steuerungseinrichtung angesteuert werden.

Vorzugsweise ist die Größe des zweiten Filterelements für eine vorbestimmte Anzahl von Waschgängen ausgelegt.

Nach einer weiteren bevorzugten Ausführungsform ist zumindest eine erste Sensoreinrichtung vorgesehen, mittels welcher ein Entleerungserfordernis des zweiten Filterelements detektierbar ist. Bevorzugt ist zumindest eine erste Sensoreinrichtung signaltechnisch mit der Steuerungseinrichtung verbunden. Vorzugsweise übermittelt die Steuerungseinrichtung einen Öffnungsbefehl an die Filtrationseinrichtung bei Detektion des Entleerungserfordernisses. Denkbar wäre auch, dass eine Hinweisvorrichtung der Steuerungseinrichtung bei Detektion des Entleerungserfordernisses angesteuert wird. Die Hinweisvorrichtung kann eine optische Hinweisvorrichtung, beispielsweise eine Leuchte oder eine akustische Hinweisvorrichtung sein.

Nach einer weiteren bevorzugten Ausführungsform ist die erste Sensoreinrichtung zumindest einen Sensor umfassend, welcher einen verminderten Durchfluss durch das zumindest eine zweite Filterelement detektiert. Hierzu könnte vorzugsweise ein Sensor vorgesehen sein, mittels welchem eine Wasserstandserfassung vorzugsweise in dem zweiten Filterelement ermöglicht ist. Alternativ oder kumulativ kann ein Sensor vorgesehen sein, welcher einen Differenzdruck zwischen dem Zuleitungselement und dem ersten und/oder dem zweiten Abflusselement detektiert. Alternativ oder kumulativ kann ein Sensor vorgesehen sein, welcher den Durchfluss aus dem zweiten Abflusselement detektiert. Vorzugsweise liegt bei Unterschreiten eines Schwellwerts des Durchflusses das Entleerungserfordernis vor und es erfolgt eine automatische Öffnung des zweiten Filterelements. Denkbar sind jedoch auch noch anderweitige Sensoren, welche das Entleerungserfordernis detektieren können. So könnte ein bevorzugter Sensor ein optischer Sensor sein, welcher das Vorhandensein einer gewissen Menge an Mikroplastikteilchen oder -fasern detektieren kann.

Nach einer weiteren bevorzugten Ausführungsform ist eine zweite Sensoreinrichtung vorgesehen, welche den Öffnungszustand des zweiten Filterelements detektiert. Vorzugsweise unterbindet die Steuerungseinrichtung einen Start eines Waschprogramms, solange das zweite Filterelement nicht geschlossen ist. Hierdurch wird sichergestellt, dass ein Waschvorgang lediglich mit einer entsprechenden Filterung erfolgen kann.

Weitere Vorteile, Ziele und Eigenschaften der vorliegenden Erfindung werden anhand nachfolgender Beschreibungen der anliegenden Figuren erläutert. Gleichartige Komponenten können in den verschiedenen Ausführungsformen gleiche Bezugszeichen aufweisen.

In den Figuren zeigen:
- Fig.1: eine seitliche Schnittansicht einer Filtrationseinrichtung nach einer Ausführungsform;
- Fig.2: eine Schnittansicht einer Filtrationseinrichtung nach einer Ausführungsform;
- Fig.3: eine seitliche Schnittansicht einer Filtrationseinrichtung nach einer Ausführungsform;
- Fig.4: eine Schnittansicht einer Filtrationseinrichtung nach einer Ausführungsform;
- Fig.5: eine seitliche Schnittansicht einer Filtrationseinrichtung nach einer Ausführungsform;
- Fig.6: eine seitliche Schnittansicht einer Filtrationseinrichtung nach einer Ausführungsform;
- Fig.7: eine perspektivische Ansicht einer Filtrationseinrichtung nach einer Ausführungsform;
- Fig.8: Haushaltsgerät umfassend zumindest eine Luftaufbereitungsvorrichtung nach einer Ausführungsform;
- Fig.9: eine Prinzipschaltskizze.

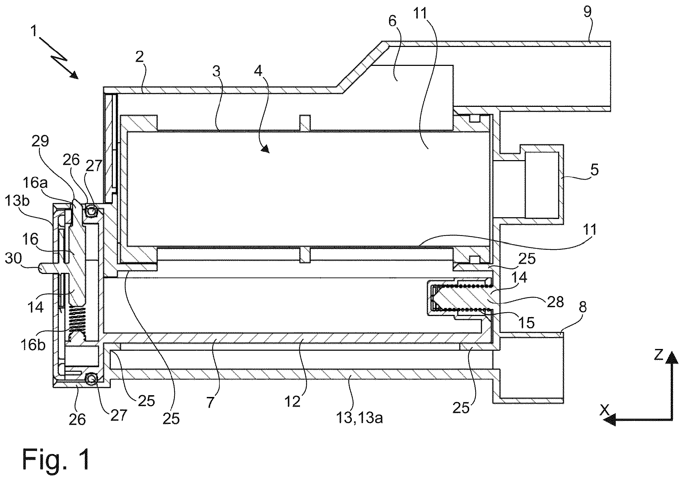

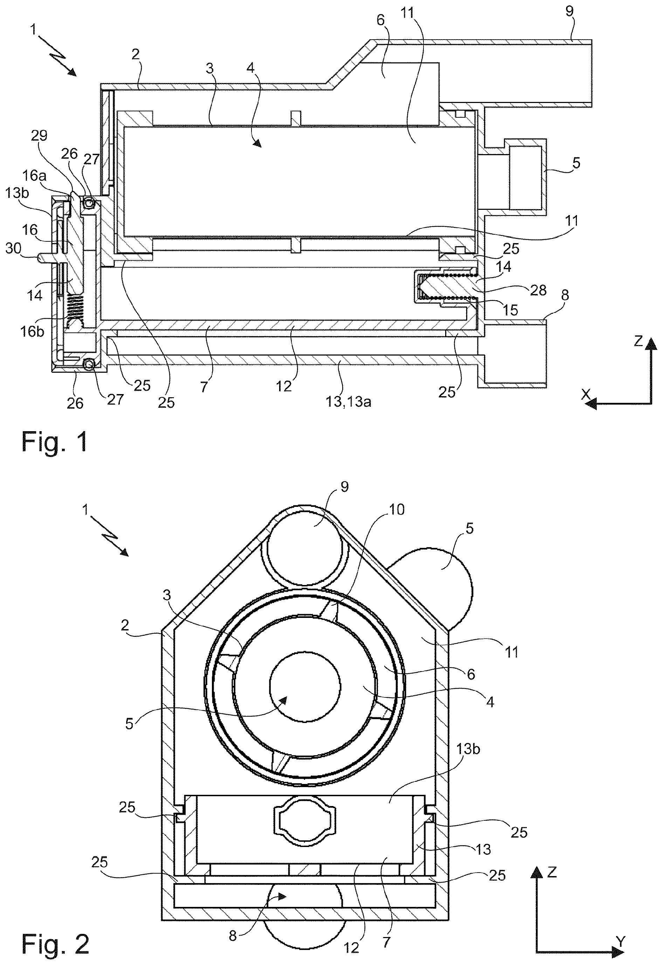

In den Figuren 1 bis 7 ist eine Filtrationseinrichtung 1 insbesondere zur Filtration von Mikroplastik für ein wasserführendes Haushaltsgerät 100 dargestellt. Die Filtrationseinrichtung 1 umfasst ein Gehäuse 2, in welchem ein erstes Filterelement 3 angeordnet ist, wobei das erste Filterelement 3 derart ausgestaltet ist, dass es einen inneren Hohlraum 4 umschließt, welcher mit einem ersten Abflusselement 5 fluidisch verbunden ist, wobei zwischen dem ersten Filterelement 3 und dem Gehäuse 2 ein Zwischenraum 6 vorhanden ist, in welchen das zu filternde Wasser einführbar ist, wobei ein zweites Filterelement 7 zwischen dem Zwischenraum 6 und einem zweiten Abflusselement 8 vorgesehen ist.

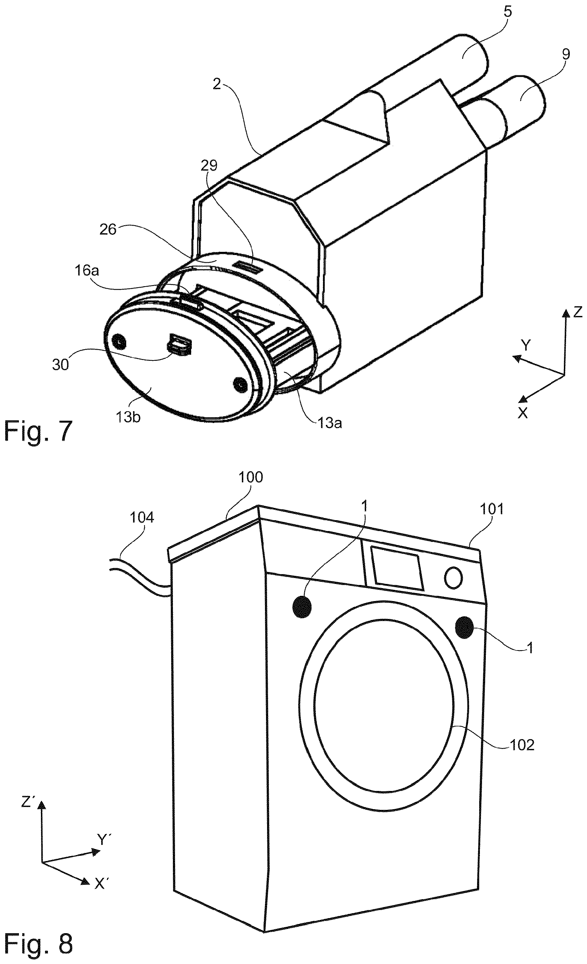

Die Filtrationseinrichtung 1 erstreckt sich entlang einer Höhenachse Z, einer Längsachse X und einer Breitenachse Y. In Figur 8 ist ein Haushaltsgerät 100 dargestellt. Dieses erstreckt sich entlang einer Höhenachse Z`, einer Längsachse X' und einer Breitenachse V'.

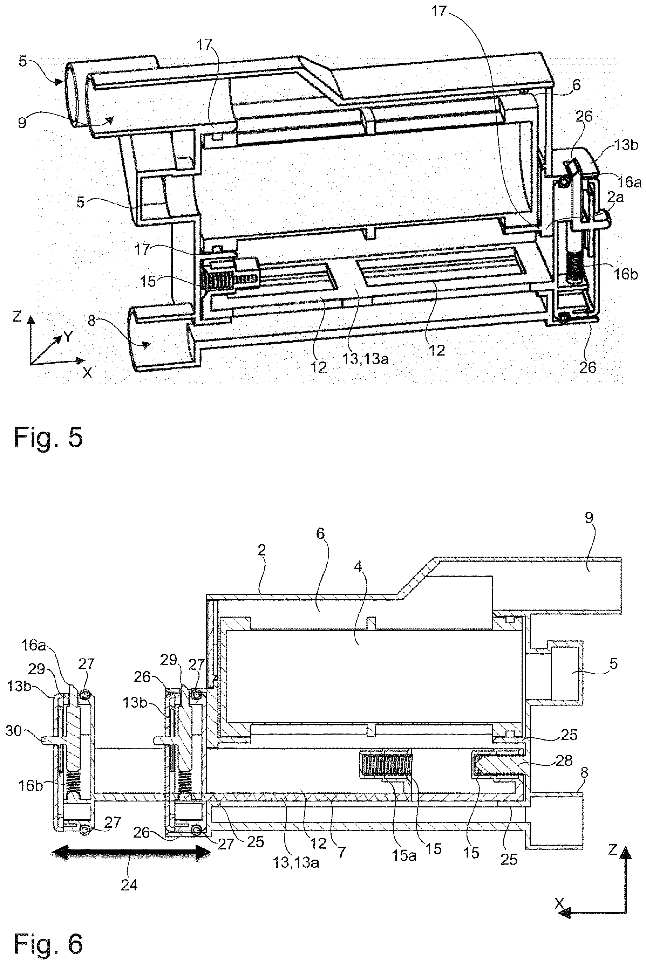

Die Filtrationseinrichtung 1 umfasst ein Gehäuse 2. Dieses ist im Wesentlichen quaderförmig ausgebildet, wobei ein oberer Abschnitt des Gehäuses 2 im Wesentlichen trapezförmig ist. Die Ausgestaltung der Form des Gehäuses 2 soll jedoch keine Einschränkung der Allgemeinheit darstellen. Da die Filtrationseinrichtung 1 innerhalb des Haushaltsgeräts 100 angeordnet ist, kann die Form des Gehäuses 2 der Filtrationseinrichtung 1 an die jeweiligen Gegebenheiten des Haushaltsgeräts 100 angepasst werden. Das Gehäuse 2 der Filtrationseinrichtung 1 erstreckt sich entlang einer Höhenachse Z. Ferner ist ein Zuleitungselement 9 vorgesehen, welches entlang der Höhenachse Z über dem ersten Filterelement 3 angeordnet ist. Das Zuleitungselement 9 kann in dem Gehäuse 2 integriert oder daran angeordnet sein. Ferner ist es dazu geeignet und dafür vorgesehen, dass eine Zuleitung 9, beispielsweise in Form eines Schlauches oder Rohres daran angeordnet werden kann. Demnach ist auch das erste Abflusselement 5 entlang der Höhenachse Z unter dem Zuleitungselement 9 angeordnet. Das zweite Filterelement 7 ist entlang der Höhenachse Z unter dem ersten Filterelement 3 angeordnet. Ferner ist das zweite Abflusselement 8 entlang der Höhenachse Z unter dem zweiten Filterelement 7 angeordnet. Sowohl das erste Abflusselement 5 als auch das zweite Abflusselement 8 können in dem Gehäuse 2 integriert sein oder daran angeordnet sein. Ferner sind diese dazu geeignet und dafür vorgesehen, dass jeweils eine Ableitung, beispielsweise in Form eines Schlauches oder Rohres daran angeordnet werden kann. In Figur 5 ist gut ersichtlich, dass das erste Abflusselement 5 sich zunächst entlang der Höhenachse Z entlang des Gehäuses 2 erstreckt. Dies erleichtert den Anschluss der entsprechenden Leitungen. Weiterhin weist das Gehäuse 2 entsprechende Aufnahmeelemente 17 auf, welche zur Halterung des ersten Filterelements 3 dienen.

Das erste Filterelement 3 ist im Wesentlichen hohlzylindrisch ausgebildet. Nach der vorliegenden dargestellten Ausführungsform weist erste Filterelement 3 einen im Wesentlichen kreisförmigen Querschnitt auf. Denkbar wäre jedoch auch anderweitig ausgebildete Querschnitte, beispielsweise elliptisch oder polygonförmig. Das erste Filterelement 3 weist eine Trägerstruktur 10 auf, an welcher zumindest ein Filtersieb 11 angeordnet ist. Durch die hohlzylindrische Ausgestaltung wird auch der innere Hohlraum 4 definiert. In diesen inneren Hohlraum 4 gelangt das Wasser nach Durchtritt durch das Filtersieb 11. Von diesem Hohlraum 4 tritt das nun gefilterte Wasser in das erste Abflusselement 5 und dann in die entsprechende erste Ableitung. Der Zwischenraum 6, in welchem das zu filternde Wasser gelangt erstreckt sich um das erste Filterelement 3 herum.

Das zweite Filterelement 7 ist verlagerbar in dem Gehäuse 2 angeordnet. Dabei ist das zweite Filterelement 7 zumindest abschnittsweise aus dem Gehäuse 2 entfernbar. Das zweite Filterelement 7 umfasst zumindest ein Filtersieb 12, welches im Wesentlichen planar ausgebildet ist. Ferner umfasst das zweite Filterelement 7 ein schubladenartig ausgebildetes Trägerelement 13. In diesem Trägerelement 13 ist das Filtersieb 12 angeordnet oder integriert.

Das Trägerelement 13 umfasst einen planaren Abschnitt 13a in welchem das Filtersieb 12 aufgenommen oder angeordnet ist. Der planare Abschnitt 13a erstreckt sich entlang der Breitenachse Y im Wesentlichen über die gesamte innere Breite der Filtrationseinrichtung 1. Ferner ist in Figur 5 zu erkennen, dass der planare Abschnitt zwei Ausnehmungen aufweist in welchen jeweils ein Filtersieb 12 angeordnet ist. Das Gehäuse 2 umfasst Auflage- und Führungseinrichtungen 25, auf welchen das Trägerelement 13 beziehungsweise der planare Abschnitt 13a aufliegen und bei einer Verlagerung des Trägerelements 13 entsprechend geführt werden. Die Auflage- und Führungseinrichtungen 25 sind vorzugsweise als Vorsprünge ausgebildet.

Das Trägerelement 13 umfasst weiterhin einen Frontabschnitt 13b mit einer Erstreckung entlang der Höhenachse Z. In einem geschlossenen Zustand liegt der Frontabschnitt 13b an einem vertikalen Anlageabschnitt 2a des Gehäuses 2 an. Das Gehäuse 2 umfasst weiterhin sich entlang der Längsachse X erstreckende Vorsprungselemente 26. Die beiden Vorspungselemente sind entlang der Höhenachse Z beabstandet. In einer geschlossenen Position des Trägerelements 13 ist der Frontabschnitt 13b zwischen den beiden Vorsprungselementen 26 angeordnet. Der Frontanschnitt 13b umfasst Gleitrollen 27, welche an einer Innenseite der Vorsprungselemente 26 anliegen beziehungsweise bei einer Verlagerung des Trägerelements 13 abrollen. Hierdurch wird eine leichtes Verlagern des Frontanschnitts 13b aus den begrenzenden Vorsprungselementen 26 erreicht.

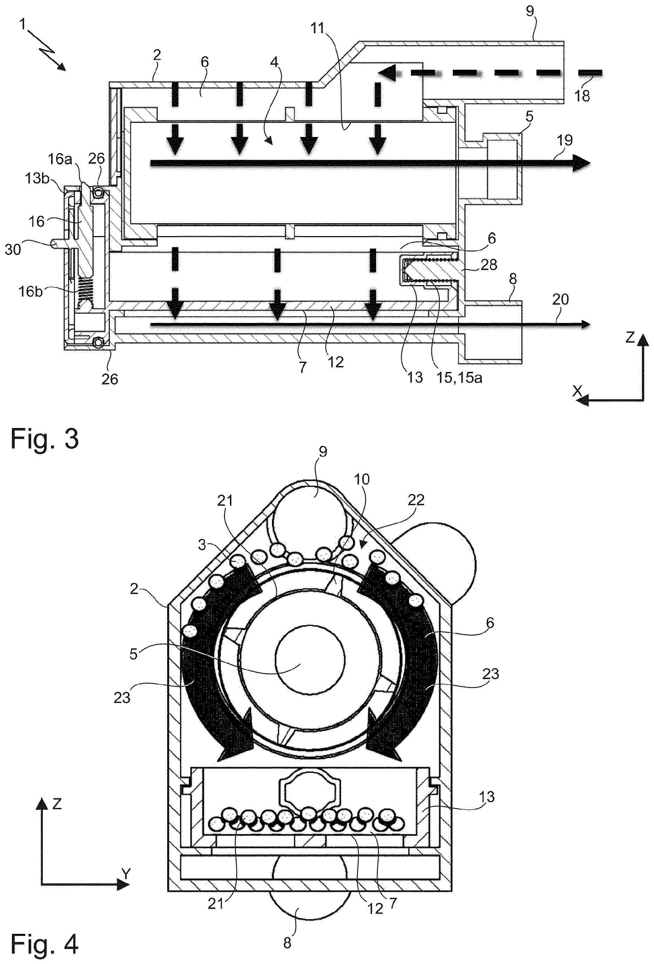

In den Figuren 3 und 4 ist die Funktion der Filtrationseinrichtung 1 dargestellt. Während eines Pumpvorgangs gelangt das zu filternde Wasser über das Zuleitungselement 9 in die die Filtrationseinrichtung 1 beziehungsweise in den Zwischenraum 6 des ersten Filterelements 3 und dem Gehäuse 2. Der Wasserfluss ist mit einem entsprechenden gestrichelten Pfeil 18 in Figur 3 verdeutlicht. Ein Großteil des Wassers tritt durch das erste Filterelement 3 und gelangt gefiltert in den inneren Hohlraum 6 und tritt dann durch das erste Abflusselement 5 aus der Filtrationseinrichtung 1. Dieser Wasserfluss ist mit einem entsprechenden Pfeil 19 in Figur 3 verdeutlicht. Ein geringer Teil des zu filternden Wassers gelangt zu dem zweiten Filterelement 7 und tritt dann nach der Filterung durch das zweite Abflusselement 8 aus der Filtrationseinrichtung 1. Dieser Wasserfluss ist mit einem entsprechenden Pfeil 20 in Figur 3 verdeutlicht. Die Mikroplastikteilchen und -fasern 21 konzentrieren sich während des Pumpvorgangs in einem Bereich mit geringer Flussgeschwindigkeit 22, welcher im oberen Bereich des Zwischenraums 6 ist. Vorzugsweise wird bei Beendigung des Pumpvorgangs die Ableitung von dem ersten Abflusselement 5 gesperrt. Hierzu kann eine entsprechende Ventileinrichtung 108 in der ersten Ableitung vorgesehen sein. Nach Beendigung des Pumpvorgangs gelangen dann die von dem ersten Filterelement 3 zurückgehaltenen Mikroplastikteilchen und -fasern 21 mit dem verbleibenden Wasser zu dem zweiten Filterelement 7. Dies ist mit entsprechenden Pfeilen 23 in Figur 3 verdeutlicht. Auch der innere Hohlraum 4 entleert sich dabei, da das Filtersieb 11 umlaufend, um den inneren Hohlraum 4,ausgebildet ist. Ein Großteil der eingeführten Mikroplastikteilchen und -fasern 21 gelangen schließlich in das zweite Filterelement 7. Das verbleibende Wasser wird durch das zweite Filterelement 7 über das zweite Abflusselement 8 abgeführt. Da das zweite Filterelement 7 aus dem Gehäuse 2 entfernbar ist, kann dieses einfach gereinigt werden. Durch eine entsprechende Reinigung des zweiten Filterelements 7 wird ein Großteil der Mikroplastikteilchen und - fasern 21 aus der Filtrationseinrichtung 1 entfernt. Somit kann eine äußerst einfach und effektive Entleerung der Filtrationseinrichtung 1 bereitgestellt werden. Die Verlagerung des schubladenartig ausgebildeten Trägerelements 13 ist mit einem Pfeil 24 in Figur 6 gezeigt.

Es ist ein Verlagerungssystem 14 vorgesehen, mittels welchem das Trägerelement 13 automatisch aus dem Gehäuse 2 verlagerbar ist. Durch eine solche automatische Öffnung des zweiten Filterelements 7 wird es dem Benutzer erleichtert das zweite Filterelement 7 zu entleeren. Das Verlagerungssystem 14 kann vielfältig ausgestaltet sein. Vorliegend umfasst das Verlagerungssystem 14 eine Vorspanneinrichtung 15, welche zwischen dem Trägerelement 13 und dem Gehäuse 2 angeordnet ist. Vorliegend ist die Vorspanneinrichtung 15 ein Federelement 15a. Im geschlossenen Zustand ist das Federelement 15a in einem gespannten Zustand. Dabei ist ein Dornelement 28 des Gehäuses 2 innerhalb des Federelements 15a angeordnet, um eine geradlinige Verformung des Federelements 15a zu sichern.

Das Verlagerungssystem 14 umfasst weiterhin eine Verriegelungseinrichtung 16, welche zwischen dem Trägerelement 13 und dem Gehäuse 2 vorgesehen ist. Die Verriegelungseinrichtung 16 ist in dem Frontanschnitt 13b des Trägerelements 13 angeordnet und umfasst einen Riegel 16a, welcher mittel einem Federelement 16b mit einer Federkraft beaufschlagt ist. Durch die Federkraftbeaufschlagung wird der Riegel 16a entlang der Höhenachse Z nach oben gedrückt. In einer geschlossenen Position des Trägerelements 13 ist ein oberer Abschnitt des Riegels 16a innerhalb einer Ausnehmung 29, welche in dem oberen der Vorsprungselemente 26 ist, vorgesehen. Durch diesen Eingriff des Riegels 16a wird das Trägerelement 13 in Position gehalten. Der Riegel 16a weist weiter eine Abschrägung auf. Bei einem Überführen des Trägerelements 13 von einer offenen Position in eine geschlossenen Position kontaktiert der Riegel 16a eine vordere Fläche des oberen Vorsprungselements 26. Durch die Abschrägung erfolgt ein Abgleiten des Riegels 16a an der vorderen Fläche des oberen Vorsprungselements 26 und der Riegel 16a wird entgegen der Federkraftbeaufschlagung nach unten gedrückt. Sobald der Riegel 16a bei der Ausnehmung 29 angelangt ist, wird dieser durch die Federkraftbeaufschlagung in die Ausnehmung 29 verlagert. An dem Riegel 16a ist weiterhin ein Griffelement 30 angeordnet. Dieses Griffelement 30 erstreckt sich entlang der Längsachse X über den Frontabschnitt 13b des Trägerelements 13 hinaus. Mittels dieses Griffelements 30 kann ein Nutzer die Verriegelung händisch öffnen.

Die Verriegelungseinrichtung 16 umfasst weiterhin eine Antriebseinrichtung, welche eine Bewegung des Riegels 16a antreibt, so dass dieser aus der Ausnehmung 29 verlagert wird. Dies Antriebseinrichtung wird von einer Steuerungseinrichtung 105 des Haushaltsgeräts 100 angesteuert. Die Antriebseinrichtung kann beispielsweise ein Stellantrieb sein, welcher mit dem Riegel 16a wirkverbunden ist. Dies kann beispielsweise mittels eines Bowdenzugs oder einer anderweitigen Übertragungseinrichtung erfolgen.

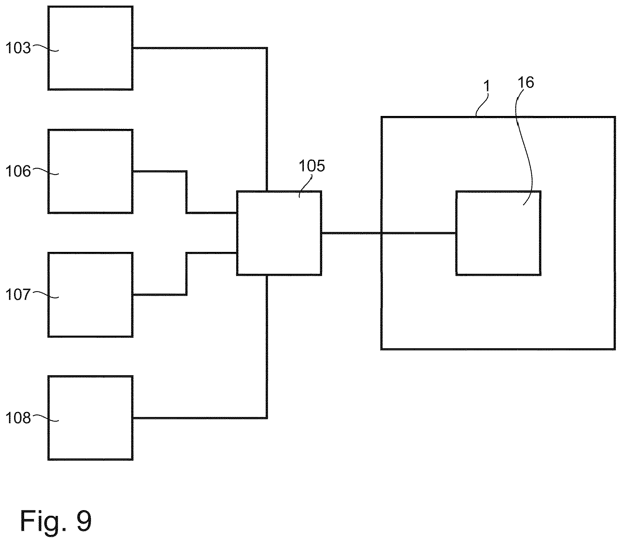

In Figur 8 ist ein Haushaltsgerät 100 in Form einer Waschmaschine dargestellt. Das Haushaltsgerät 100 umfasst ein Gehäuse 101 und einen darin vorgesehenen Laugenbehälter 102. Das Gehäuse 101 umfasst eine vordere Seite, welche eine Verschlussvorrichtung für den Laugenbehälter 102, ein Anzeige- und Bedienfeld sowie eine Waschmittelschublade umfasst. Die Filtrationseinrichtung 1 ist in einem oberen Bereich einer vorderen Seite des Gehäuses 101 vorgesehen und somit für einen Nutzer leicht zugänglich. Mögliche Anordnungen sind in Figur 8 dargestellt. Das Haushaltsgerät 100 umfasst vorzugsweise lediglich eine Filtrationseinrichtung 1. Das wasserführende Haushaltsgerät 100 umfasst eine Steuerungseinrichtung 105, welche unter anderem die Filtrationseinrichtung 1 ansteuert. Weiterhin umfasst das wasserführende Haushaltsgerät 100 eine Pumpeinrichtung 103, welche Wasser aus dem Laugenbehälter 102 zu der zumindest einen Filtrationseinrichtung 1 befördert. Hierzu ist eine Zuleitung, welche mit dem Zuleitungselement 9 verbunden ist, vorgesehen. Auch die Abführung des gefilterten Wassers aus dem ersten Abflusselement 5 kann mittels der Pumpeinrichtung 103 erfolgen. Die Steuerungseinrichtung 105 steuert ebenso die Pumpeinrichtung 103, wie in der Prinzipschaltskizze in Figur 9 ersichtlich.

Ferner ist das erste Abflusselement 5 mittels einer ersten Ableitung fluidisch mit dem Abfluss 104 des wasserführenden Haushaltsgeräts 100 und/oder dem Laugenbehälter 102 verbunden. In dieser ersten Ableitung kann eine Ventileinrichtung 108 vorgesehen sein, welches von der Steuerungseinrichtung 105 derart gesteuert wird, dass bei dem Pumpvorgang die Ventileinrichtung 108 geöffnet ist und bei Beendigung des Pumpvorgangs die Ventileinrichtung 108 geschlossen ist. Das zweite Abflusselement 8 ist über eine Bypassleitung mit einem Abfluss 104 des wasserführenden Haushaltsgeräts 100 verbunden. Denkbar wäre, dass in dem zweiten Abflusselement 8 und/oder in der Bypassleitung ist eine Zusatzpumpeinrichtung vorgesehen ist, mittels welcher das Wasser aus dem zweiten Abflusselement 8 beziehungsweise der Filtrationseinrichtung 1 förderbar ist. Nach diesem Gedanken wäre ein Vorsehen einer Ventileinrichtung nicht notwendig. Während des Pumpvorgangs der Pumpeinrichtung 103 ist die Zusatzpumpeinrichtung nicht aktiviert, so dass über das zweite Abflusselement 8 kein Wasser abgeleitet werden kann. Das gefilterte Wasser wird demnach vorteilhafterweise während des Pumpvorgangs lediglich über das erste Abflusselement 5 abgeleitet. Nach Beendigung des Pumpvorgangs der Pumpeinrichtung 103 wird die Zusatzpumpvorrichtung aktiviert. Somit kann nach Beendigung des Pumpvorgangs vorteilhafterweise das gefilterte Wasser lediglich über das zweite Abflusselement 8 abgeleitet werden, da ein Abfließen über das erste Abflusselement 5 nicht mehr erfolgt.

Weiterhin ist zumindest eine erste Sensoreinrichtung 106 vorgesehen, mittels welcher ein Entleerungserfordernis des zweiten Filterelements 7 detektierbar ist. Diese erste Sensoreinrichtung 106 kann auf vielfältige Weise ausgebildet sein, beispielsweise kann ein Durchflusssensor vorgesehen sein, welcher den Durchfluss durch das zweite Abflusselement 8 und/der die damit verbundene Ableitung detektiert. Denkbar wäre auch ein optischer Sensor, welcher eine vorbestimmte Menge an Mikroplastikteilchen und -fasern 21 in dem zweiten Filterelement 7 detektiert. Bei Detektion des Entleerungserfordernisses übermittelt die Steuerungseinrichtung 105 einen Öffnungsbefehl an die Filtrationseinrichtung 1, d.h. die Verriegelungseinrichtung 16 insbesondere die entsprechende Antriebseinrichtung wird angesteuert, so dass die Trägereinrichtung 13 entriegelt wird und, angetrieben durch die Vorspanneinrichtung 15, von der geschlossenen Position in die offene Position verlagert wird. Dies ist in Figur 6 anhand des Pfeiles 24 dargestellt. Durch die automatische Öffnung wird dem Nutzer das Erfordernis einer Entleerung der Filtrationseinrichtung 1 mitgeteilt. Denkbar wäre auch, dass eine Hinweisvorrichtung vorgesehen ist, welche in optischer oder akustischer Form dem Nutzer das Erfordernis einer Entleerung zusätzlich mitteilt.

Dabei kann eine zweite Sensoreinrichtung 107 vorgesehen sein, welche den Öffnungszustand des zweiten Filterelements 7 detektiert. Diese Sensoreinrichtung 107 ist mit der Steuerungseinrichtung 105 signaltechnisch verbunden. Die Steuerungseinrichtung 105 unterbindet einen Start eines Waschprogramms, solange das zweite Filterelement 7 nicht geschlossen ist. Somit wird sichergestellt, dass kein Waschvorgang mit einem geöffnet zweiten Filterelement 7 stattfinden kann.

Durch die Filtrationseinrichtung 1 wird eine effektive Filterung von Mikroplastikteilchen und -fasern 21 erreicht. Ferner entfällt durch die einfache Reinigungsmöglichkeit der Filtrationseinrichtung 1 ein aufwändiges Ersetzten von Mikroplastikfiltern.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer, in einzelnen oder in unterschiedlichen Figuren gezeigter Merkmale ergeben können.

### Bezugszeichenliste

- 1: Filtrationseinrichtung
- 2: Gehäuse
- 2a: Anlageabschnitt des Gehäuses
- 3: erstes Filterelement
- 4: innerer Hohlraum des ersten Filterelements
- 5: erstes Abflusselement
- 6: Zwischenraum
- 7: zweites Filterelement
- 8: zweites Abflusselement
- 9: Zuleitungselement
- 10: Trägerstruktur
- 11: Filtersieb
- 12: Filtersieb
- 13: Trägerelement
- 13a: planare Abschnitt
- 13b: Frontabschnitt
- 14: Verlagerungssystem
- 15: Vorspanneinrichtung
- 15a: Federelement
- 16: Verriegelungseinrichtung
- 16a: Riegel
- 16b: Federelement
- 17: Aufnahmeelement
- 18: Pfeil
- 19: Pfeil
- 20: Pfeil
- 21: Mikroplastikteilchen und -fasern
- 22: Bereich mit geringer Flussgeschwindigkeit
- 23: Pfeil
- 24: Pfeil
- 25: Auflage- und Führungseinrichtungen
- 26: Vorsprungselemente
- 27: Gleitrollen
- 28: Dornelement
- 29: Ausnehmung
- 30: Griffelement
- 100: Haushaltsgerät
- 101: Gehäuse
- 102: Laugenbehälter
- 103: Pumpeinrichtung
- 104: Abfluss des Haushaltsgeräts
- 105: Steuerungseinrichtung
- 106: erste Sensoreinrichtung
- 107: zweite Sensoreinrichtung
- 108: Ventileinrichtung
- X: Längsachse der Filtrationseinrichtung
- Y: Breitenachse der Filtrationseinrichtung
- Z: Höhenachse der Filtrationseinrichtung
- X': Längsachse des Haushaltsgeräts
- Y': Breitenachse des Haushaltsgeräts
- Z': Höhenachse des Haushaltsgeräts

## Patentansprüche

1. Filtrationseinrichtung (1) insbesondere zur Filtration von Mikroplastik für ein wasserführendes Haushaltsgerät (100),
**dadurch gekennzeichnet, dass**
die Filtrationseinrichtung (1) ein Gehäuse (2) umfasst, in welchem ein erstes Filterelement (3) angeordnet ist, wobei das erste Filterelement (3) derart ausgestaltet ist, dass es einen inneren Hohlraum (4) umschließt, welcher mit einem ersten Abflusselement (5) fluidisch verbunden ist, wobei zwischen dem ersten Filterelement (3) und dem Gehäuse (2) ein Zwischenraum (6) vorhanden ist, in welchen das zu filternde Wasser einführbar ist, wobei ein zweites Filterelement (7) zwischen dem Zwischenraum (6) und einem zweiten Abflusselement (8) vorgesehen ist.

2. Filtrationseinrichtung (1) nach Anspruch 1
**dadurch gekennzeichnet, dass**
das Gehäuse (2) der Filtrationseinrichtung (1) sich entlang einer Höhenachse Z erstreckt, wobei ein Zuleitungselement (9) vorgesehen ist, welches entlang der Höhenachse Z über dem ersten Filterelement (3) angeordnet ist, wobei das zweite Filterelement (7) entlang der Höhenachse Z unter dem ersten Filterelement (3) angeordnet ist, wobei das zweite Abflusselement (8) entlang der Höhenachse Z unter dem zweiten Filterelement (7) angeordnet ist.

3. Filtrationseinrichtung (1) nach Anspruch 1 oder 2
**dadurch gekennzeichnet, dass**
das erste Filterelement (3) im Wesentlichen hohlzylindrisch ausgebildet ist, wobei das erste Filterelement (3) im Wesentlichen einen kreisförmigen Querschnitt aufweist, wobei das erste Filterelement (3) eine Trägerstruktur (10) aufweist, an welcher zumindest ein Filtersieb (11) angeordnet ist.

4. Filtrationseinrichtung (1) nach einem der vorhergehenden Ansprüche
**dadurch gekennzeichnet, dass**
das zweite Filterelement (7) verlagerbar in dem Gehäuse (2) angeordnet ist, wobei das zweite Filterelement (7) zumindest abschnittsweise aus dem Gehäuse (2) entfernbar ist, wobei das zweite Filterelement (7) zumindest ein Filtersieb (12) umfasst, welches im Wesentlichen planar ausgebildet ist, wobei das zweite Filterelement (7) ein schubladenartig ausgebildetes Trägerelement (13) umfasst, in welchem das Filtersieb (12) angeordnet ist oder integriert ist.

5. Filtrationseinrichtung (1) nach Anspruch 3,
**dadurch gekennzeichnet, dass**
ein Verlagerungssystem (14) vorgesehen ist, mittels welchem das Trägerelement (13) automatisch aus dem Gehäuse (2) verlagerbar ist, wobei das Verlagerungssystem (14) eine Vorspanneinrichtung (15) umfasst, welche zwischen dem Trägerelement (13) und dem Gehäuse (2) angeordnet ist, wobei das Verlagerungssystem (14) eine Verriegelungseinrichtung (16) umfasst, welches zwischen dem Trägerelement (13) und dem Gehäuse (2) vorgesehen ist, wobei das Verrieglungselement (16) automatisch betätigbar ist.

6. Wasserführendes Haushaltsgerät (100) umfassend ein Gehäuse (101) zumindest einen Laugenbehälter (102) und zumindest eine Filtrationseinrichtung (1) nach einem der vorhergehenden Ansprüche.

7. Wasserführendes Haushaltsgerät (100) nach Anspruch 6
**dadurch gekennzeichnet, dass**
das wasserführendes Haushaltsgerät (100) eine Pumpeinrichtung (103) umfasst, welche Wasser aus dem Laugenbehälter (102) zu der zumindest einen Filtrationseinrichtung (1) befördert, wobei das erste Abflusselement (5) fluidisch mit dem Laugenbehälter (102) verbunden ist, wobei das zweite Abflusselement (8) über eine Bypassleitung mit einem Abfluss (104) des wasserführenden Haushaltsgeräts (100) verbunden ist.

8. Wasserführendes Haushaltsgerät (100) nach einem der Ansprüche 6 bis 7,
**dadurch gekennzeichnet, dass**
das wasserführende Haushaltsgerät (100) eine Steuerungseinrichtung (105) umfasst, welche die Filtrationseinrichtung (1) ansteuert, wobei zumindest eine erste Sensoreinrichtung (106) vorgesehen ist, mittels welcher ein Entleerungserfordernis des zweiten Filterelements (7) detektierbar ist, wobei die Steuerungseinrichtung (105) einen Öffnungsbefehl an die Filtrationseinrichtung (1) bei Detektion des Entleerungserfordernisses übermittelt.

9. Wasserführendes Haushaltsgerät (100) nach Anspruch 8,
**dadurch gekennzeichnet, dass**
die erste Sensoreinrichtung (106) zumindest einen Sensor umfasst, welcher einen verminderten Durchfluss durch das zumindest eine zweite Filterelement (7) detektiert, wobei bei Unterschreiten eines Schwellwerts des Durchflusses das Entleerungserfordernis vorliegt.

10. Wasserführendes Haushaltsgerät (100) nach einem der Ansprüche 8 bis 9,
**dadurch gekennzeichnet, dass**
eine zweite Sensoreinrichtung (107) vorgesehen ist, welche den Öffnungszustand des zweiten Filterelements (7) detektiert, wobei die Steuerungseinrichtung (105) einen Start eines Waschprogramms unterbindet, solange das zweite Filterelement (7) nicht geschlossen ist.
